# EUROPÄISCHE PATENTSCHRIFT

(11) **EP 0 460 626 B1**
(45) Veröffentlichungstag und Bekanntmachung des Hinweises auf die Patenterteilung: **02.01.1997**
(21) Anmeldenummer: 91109169.2
(22) Anmeldetag: 05.06.1991
(51) Int. Cl.: H04B 10/20, H04B 10/00

(54) **Optisches Datenübertragungssystem**
Optical data transmission system
Système de transmission de données optiques

(30) Priorität: 05.06.1990 DE 4017997
(43) Veröffentlichungstag der Anmeldung: 11.12.1991
(73) Patentinhaber: SIEMENS AKTIENGESELLSCHAFT, 80333 München (DE)
(72) Erfinder: Müller, Titus, Dr., W-6742 Herxheimweyher (DE); Thamm, Peter, Dr., W-7500 Karlsruhe 41 (DE); Muhr, Andreas, W-7515 Linkenheim (DE)

(56) Entgegenhaltungen:
- EP-A- 0 149 495
- EP-A- 0 159 832
- EP-A- 0 348 329
- DE-A- 3 908 786

## Beschreibung

Die Erfindung betrifft ein optisches Datenübertragungssystem nach dem Oberbegriff des Anspruchs 1.

Ein derartiges Datenübertragungssystem ist aus der EP-A-0 149 495 bekannt und dient zur Übertragung von Daten zwischen Teilnehmern in den Masten einer Hochspannungsleitung. Dadurch, daß die jeweils übernächsten Teilnehmer über optische Datenübertragungsstrecken miteinander verbunden sind, wird erreicht, daß jeder Teilnehmer mit nur einem optischen Sender und Empfänger auskommt, ohne daß in dem Datenübertragungssystem an irgendeiner Stelle die Datenübertragungsstrecke zwischen zwei miteinander verbundenen Teilnehmern zu lang wird.

Aus der EP-A-0 348 329 ist ein weiteres Datenübertragungssystem für Teilnehmer bekannt, die als Baugruppen in gleichen Abständen nebeneinander in einem Baugruppenträger angeordnet sind. Jeder Teilnehmer weist für jeden der beiden benachbarten Teilnehmer jeweils einen optischen Sender und einen optischen Empfänger auf, wobei jeweils ein optischer Sender eines Teilnehmers einem optischen Empfänger des benachbarten Teilnehmers gegenüberliegt und die dazwischenliegende Luftstrecke als optische Datenübertragungsstrecke dient.

Der Erfindung liegt die Aufgabe zugrunde, insbesondere für Automatisierungssysteme, einen modularen Aufbau des in dem Oberbegriff des Anspruchs 1 angegebenen Datenübertragungssystems zu ermöglichen.

Erfindungsgemäß wird diese Aufgabe mit den im kennzeichnenden Teil des Anspruchs 1 angegebenen Maßnahmen gelöst.

Anhand der Zeichnungen, in denen Ausführungsbeispiele der Erfindung veranschaulicht sind, werden im folgenden die Erfindung sowie Ausgestaltungen, Erweiterungen und Vorteile näher beschrieben und erläutert.

Es zeigen
- Figur 1: den prinzipiellen Aufbau eines optischen, ringförmigen Datenübertragungssystems,
- Figur 2: den Aufbau eines ringförmigen Übertragungssystems mit verschachtelter Anordnung der Teilnehmer,
- Figur 3: ein modular aufgebautes Übertragungssystem mit nebeneinander angeordneten Teilnehmern,
- Figur 4: eine Erweiterung des Systems nach Figur 3,
- Figur 5: ein weiteres modulares Übertragungssystem,
- Figur 6: ein Übertragungssystem mit gleichen Moduln in gleicher Anordnung,
- Figur 7: ein Ubertragungssystem mit Lichtschächten als Übertragungsstrecken,
- Figur 8: ein Modul zum Aufbau des Übertragungssystems nach Figur 7,
- Figur 9: ein zweites Modul zum Aufbau des Übertragungssystems nach Figur 7,
- Figur 10: ein weiteres modular aufgebautes Übertragungssystem.

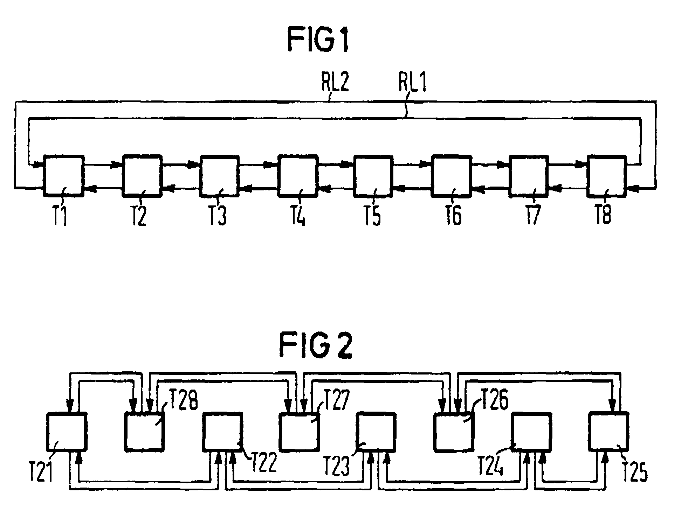

In Figur 1 sind mit T1, T2, T3 ... T8 Teilnehmer eines Datenübertragungssystems bezeichnet, die so in zwei Übertragungsleitungen geschaltet sind, daß zwei Übertragungsringe gebildet sind. Im einen Ring werden die Daten in Richtung der jeweils um Eins höheren Teilnehmernummer von Teilnehmer zu Teilnehmer übergeben. Der Teilnehmer T8 überträgt die Daten über eine Rückleitung RL1 zum Teilnehmer T1. Im anderen Ring werden die Daten dem Teilnehmer mit der jeweils um Eins niedrigeren Nummer übergeben. Der Teilnehmer T1 sendet die Daten über eine Rückleitung RL2 an den Teilnehmer T8. Prinzipiell genügt ein Ring. Dies hat aber den Nachteil, daß im Falle eines einzigen Fehlers im Ring die gesamte Datenübertragung unterbrochen wird und das System ausfällt. Will man das System nach Figur 1 modular aufbauen, so daß man einzelne Teilnehmer entfernen oder weitere Teilnehmer hinzufügen kann, so muß auch die Länge der Rückleitungen RL1, RL2 geändert werden oder man muß die Länge von vorn herein so groß wählen, daß sie für den maximalen Ausbau gerade ausreicht. Der dann überflüssige Teil der Rückleitungen kann auf eine Rolle aufgewickelt werden. Es können die bekannten Übertragungsverfahren angewandt werden. Z. B. kann jeder Teilnehmer Master sein und die Datenübertragung steuern. Die von den Teilnehmern ausgesandten Daten, die mit Adressen versehen sind, können nur bis zum jeweils adressierten Teilnehmer durchgeschaltet werden. Sie können aber auch einmal umlaufen, bis sie den sendenden Teilnehmer wieder erreichen, so daß dieser die ordnungsgemäße Übertragung prüfen kann. Im letzteren Falle können alle Teilnehmer alle übertragenen Daten mithören.

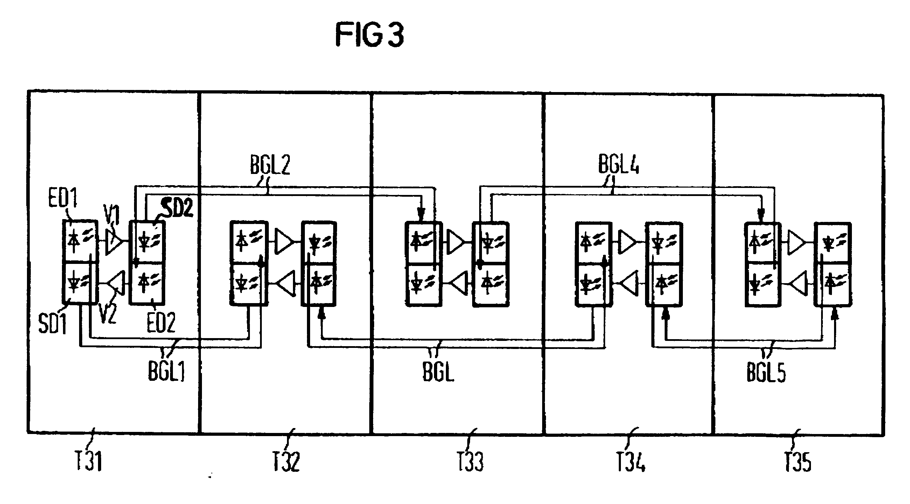

Der beschriebene Nachteil der variablen Länge der Rückleitungen RL1, RL2 des Systems nach Figur 1 ist gemäß der Erfindung in der Anordnung nach Figur 2 dadurch vermieden, daß nicht die jeweils benachbarten Teilnehmer miteinander verbunden sind, sondern die jeweils übernächsten. Die Anordnung nach Figur 2 enthält acht Teilnehmer T21, T22 ... T28. Die innerhalb der Teilnehmerreihe liegenden Teilnehmer T22, T27, T23, T26 sind ausschließlich mit den übernächsten Teilnehmern verbunden. Bei den an den Enden der Reihe liegenden Teilnehmern T21, T28 bzw. T24, T25 ist dies nicht möglich, diese müssen daher auch mit den benachbarten Teilnehmern verbunden sein. Eine solche Anordnung hat gegenüber der nach Figur 1 den Vorteil, daß, wenn die Teilnehmer in gleichen Abständen nebeneinander angeordnet sind, die Verbindungsstrecken zwischen den Teilnehmern gleich lang sind und zusätzliche Teilnehmer beliebig hinzugefügt werden können, ohne daß eine Rückleitung zu verändern ist. Ein Teilnehmer oder eine Verbindungsstrecke zwischen Teilnehmern kann ausfallen, ohne daß das Gesamtsystem ausfällt. Die Adressen der Teilnehmer sind durch ihren Platz gegeben. Zur Datenübertragung schickt der jeweils sendende Teilnehmer die Daten in der einen Richtung zum jeweils übernächsten Modul. Z. B. sendet der Teilnehmer T22 die Daten an den Teilnehmer T23, dieser zum Teilnehmer T24. Beim Teilnehmer T25 wird die Übertragungsrichtung umgekehrt, die Daten laufen zurück über die Teilnehmer T26, T27, T28 zu dem am andern Ende liegenden Teilnehmer T21 und von dort wieder nach rechts zum Teilnehmer T22. Im fehlerfreien Fall empfängt jeder Teilnehmer, einschließlich des ursprünglichen Senders, die Daten. Empfängt dieser nicht seine ausgesendeten Daten, so wird eine vorgegebene Zeit auf die Antwort gewartet. Kommt innerhalb dieser Zeit keine oder nicht die richtige Antwort an, so ist die Übertragungsleitung unterbrochen. Die Daten werden dann in der anderen Richtung auf den Bus gesendet, im angegebenen Beispiel vom Teilnehmer T22 zum Teilnehmer T21, von dort zum Teilnehmer T28 und so fort. Auf diese Weise ist es möglich, einen Fehler zu orten und zu umgehen. Anstatt die zweite Übertragungsleitung erst dann zu nutzen, wenn auf der ersten ein Fehler festgestellt wurde, können die Daten gleichzeitig auf die beiden Übertragungsleitungen gegeben werden, so daß sie auch gleichzeitig in entgegengesetzter Richtung im Übertragungssystem umlaufen. Prinzipiell kann dann jeder Teilnehmer durch Vergleich der Daten die fehlerfreie Übertragung feststellen.

Die Adressen der Teilnehmer können in einem speziellen Adressierbetrieb vergeben werden, indem ein als Master arbeitender Teilnehmer dem anderen mitteilt, daß die nachfolgenden Telegramme nicht weitergegeben werden sollen. Alle Teilnehmer empfangen dann nur noch, senden aber nicht mehr weiter. In dieser Betriebsart kann der Master nur noch den unmittelbar mit ihm verbundenen Teilnehmer ansprechen. Diesem wird dann seine Adresse und evtl. auch andere Parameter übergeben; abschließend wird er aufgefordert, die Telegramme wieder weiterzugeben. Dieses Verfahren wiederholt sich mit jedem Teilnehmer, bis alle mit Adressen und Parametern versorgt sind und der Ring wieder geschlossen ist. Die Anzahl der Wiederholungen gibt die Anzahl der Teilnehmer an und aus dieser kann wiederum auf den Steckplatz der einzelnen Teilnehmer geschlossen werden. Ist z. B. in der Anordnung nach Figur 2 der Teilnehmer T21 der Master, werden nacheinander sieben Teilnehmer angesprochen. Es muß sich deshalb der Teilnehmer T22 im dritten Steckplatz von links befinden, der Teilnehmer T23 auf dem fünften und so fort. Wenn die Hälfte der Teilnehmer zugeordnet ist, wird, von rechts kommend, die andere Hälfte den dazwischenliegenden Steckplätzen zugeordnet, also der Teilnehmer T25 dem Steckplatz Nummer 8, der Teilnehmer T26 dem Steckplatz Nummer 6 und so fort.

Eine konstruktive Ausgestaltung der Anordnung nach Figur 2 ist in Figur 3 veranschaulicht. Sie enthält fünf Teilnehmer T31, T32 ... T35, die in einem Baugruppenträger untergebracht sind und je einen Rückwandmodul aufweisen. Die Rückwandmoduln können in der gewünschten Anzahl nebeneinandergereiht werden. In ihnen können Führungen zur Aufnahme der Verbindungsleitungen zwischen den Teilnehmern vorgesehen sein. Die Teilnehmer bestehen ferner aus Baugruppen, die in die Rückwandmoduln steckbar sind. Die Baugruppen weisen Transceiver auf, die jeweils aus zwei Sendedioden SD1, SD2, zwei Empfangsdioden ED1, ED2 und zwei Verstärkern V1, V2 bestehen. Die von den Empfangsdioden erzeugten elektrischen Signale werden von den Verstärkern regeneriert und als Steuersignale den Sendedioden zugeführt. Ferner werden die Ausgangssignale der Verstärker den Baugruppen zugeführt. Die Baugruppen selbst, sowie die Steckverbinder und mechanische Befestigungselemente sind der Übersichtlichkeit halber nicht dargestellt. Die Verbindungen zwischen den Teilnehmern bestehen aus zu Bügeln BGL1, BGL2 ... BGL5 geformten Lichtwellenleitern aus Glas oder Kunststoff, die in Führungen der Rückwandmoduln liegen. Zweckmäßig enthält jeder Bügel zwei Adern für die beiden Übertragungsrichtungen. Die Anordnung nach Figur 3 kann weitgehend aus einheitlichen Moduln zusammengesetzt werden. Innerhalb der Teilnehmerreihe haben die Verbindungsleitungen zwischen den Teilnehmern gleiche Länge und gleiche Form. Lediglich die Verbindungen BGL1, BGL5 zwischen den letzten und den vorletzten Teilnehmern sind kürzer, so daß dort andere Verbindungsbügel eingesetzt sind. Die einzelnen Teilnehmer sind so aufgebaut, daß nach Einsetzen der Baugruppen mit den Transceivern eine optische Verbindung zu den Lichtwellenleiterbügeln hergestellt ist. Die Anordnung nach Figur 3 kann einfach erweitert werden, indem Rückwandmoduln hinzugefügt und die Verbindungsleitungen eingelegt werden, wobei die letzte Verbindungsleitung kürzer ist. In die Rückwandmoduln brauchen dann nur noch die Baugruppen eingesteckt zu werden.

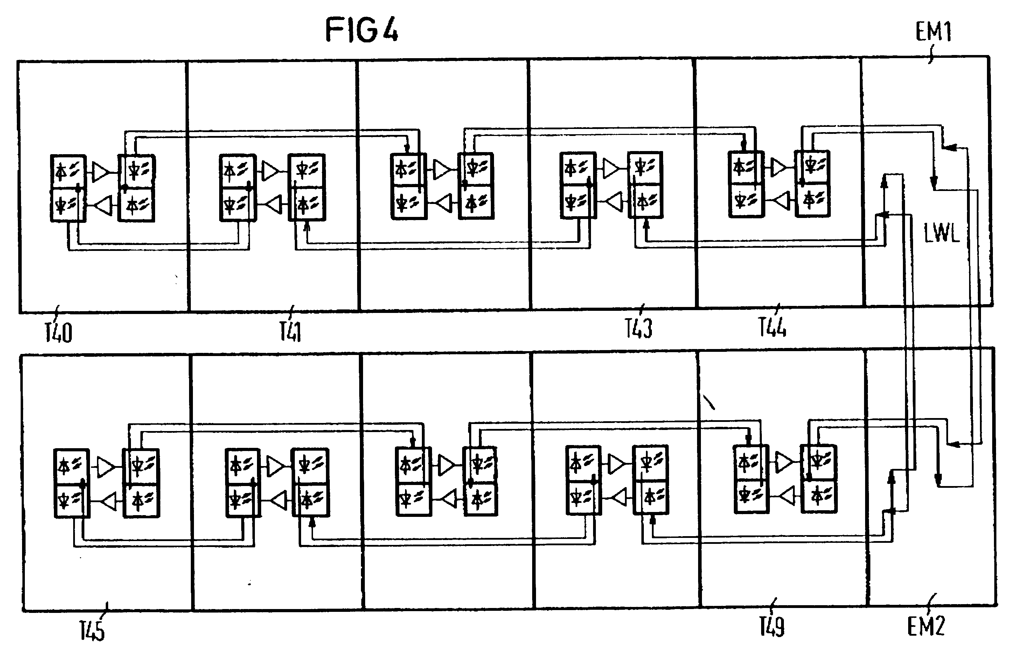

Reicht ein Baugruppenträger für die gewünschte Teilnehmerzahl nicht aus, lassen sich ohne weiteres weitere Baugruppenträger anschließen, wie in Figur 4 veranschaulicht ist. Ein erster Baugruppenträger enthält dort fünf Teilnehmer T40, T41 ... T44. An den letzteren schließt sich ein Erweiterungsmodul EM1 an, auf dem in gleicher Weise wie auf den Rückwandmoduln der Teilnehmer T31, T35 der Anordnung nach Figur 3 ein kurzer und ein langer Lichtwellenleiterbügel vom benachbarten Teilnehmer T44 und vom übernächsten Teilnehmer T43 geführt sind. Ein zweiter Baugruppenträger enthält weitere fünf Teilnehmer T45 ... T49 sowie ein dem Erweiterungsmodul EM1 entsprechenden Modul EM2. Über Lichtwellenleiter LWL1 sind die in den Erweiterungsmoduln EM1, EM2 endenden, in den Lichtwellenleiterbügeln enthaltenden Lichtwellenleiter miteinander verbunden. Die Teilnehmer T40, T41 ... T49 bilden daher ein einheitliches Übertragungssystem. Entsprechend können noch weitere Gruppen von Teilnehmern zugeschaltet werden, wobei die einzelnen Gruppen nicht räumlich benachbart zu sein brauchen, sondern auch weit voneinander entfernt sein können.

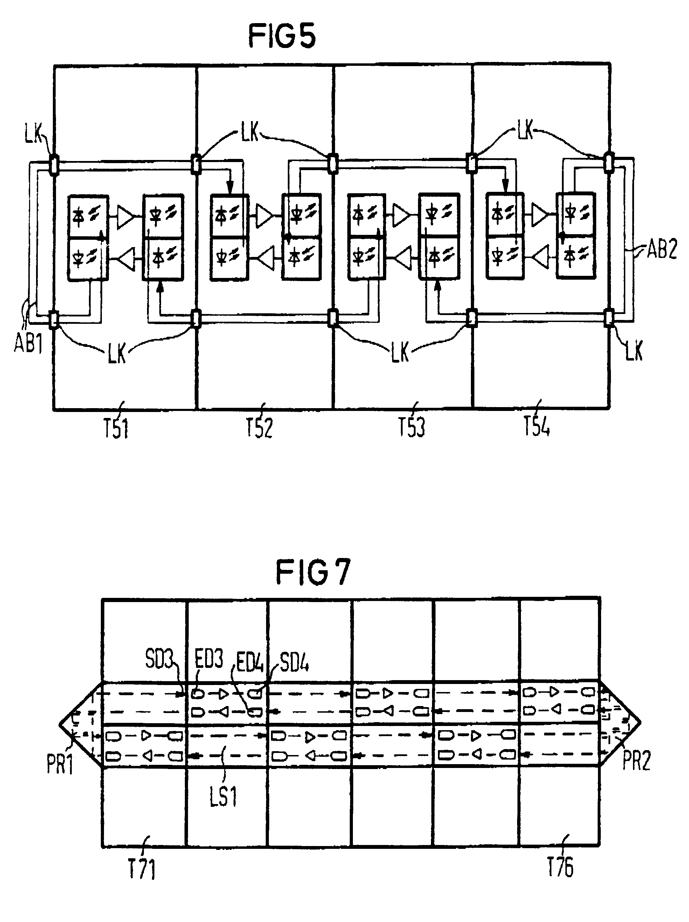

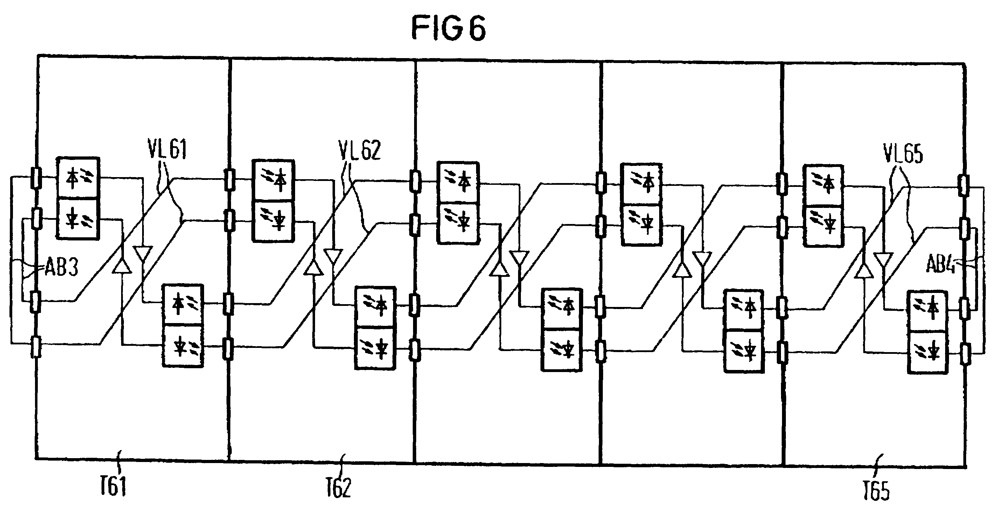

Die Anordnungen nach den Figuren 3 und 4 haben den Nachteil, daß, wenn ein Teilnehmer hinzugefügt werden soll, die beiden letzten Baugruppen abgezogen werden und die passenden Bügel eingelegt werden müssen. Figur 5 zeigt eine Anordnung mit vier Teilnehmern T51, T52, T53 und T54, die diesen Nachteil nicht aufweist. Die Teilnehmer bestehen wieder aus Rückwandmoduln und in diese gesteckte Baugruppen. Die die Teilnehmer verbindenden Lichtwellenleiter sind an den Rändern der Rückwandmoduln unterbrochen. An den Unterbrechungsstellen sind Koppler LK eingesetzt. Die Lichtwellenleiter brauchen daher nicht mehr getrennt in die Rückwandmoduln eingelegt zu werden, sondern sie sind fest eingebaut. An den Enden der Anordnung sind Abschlußbügel AB1, AB2 angebracht, welche die Übertragungsleitungen zu Ringen schließen. Legt man die Koppelstellen an den Rändern der Rückwandmoduln so aus, daß anstelle eines weiteren Moduls auch ein Lichtwellenleiterstecker angebracht werden kann, läßt sich eine weitere Teilnehmergruppe, entsprechend der Erweiterungsgruppe mit den Teilnehmern T45, T49 der Figur 4, anschließen, ohne daß in diesem Falle der Platz eines Rückwandmodul für einen Erweiterungsmodul geopfert werden muß. Die Lichtwellenleiterkoppler LK führen zwar zu einer erhöhten Dämpfung; diese kann aber hingenommen werden, da die Leitungslänge zwischen zwei Teilnehmern kurz ist und durch geeignete Ausbildung der Lichtwellenleiterkoppler deren Dämpfung genügend kleingehalten werden kann. Beispielsweise können die Enden der Lichtwellenleiter linsenförmig geformt sein, so daß das austretende Licht auf die gegenüberliegende Eintrittsfläche des angeschlossenen Lichtwellenleiters gebündelt wird. Auch ist eine Steckerverbindung möglich.

In der Anordnung nach Figur 5 sind die Rückwandmoduln und die optischen Sender und Empfänger wechselweise um je 180° gedreht. In der Anordnung nach Figur 6 mit Teilnehmern T61, T62 ... T65 ist dies dadurch vermieden, daß die Verbindungsleitungen VL61, VL62 ... VL65 zwischen den jeweils übernächsten Einheiten schräg durch die Rückwandmoduln geführt sind, so daß nicht nur gleiche Rückwandmoduln verwendet werden können, sondern auch ihre Ausrichtung einheitlich ist. An den beiden Enden der Teilnehmergruppe sind die Übertragungsleitungen wie in der Anordnung nach Figur 5 über Abschlußbügel AB3, AB4 zu Ringen geschlossen. Bei einer solchen Leitungsführung können die Verbindungsleitungen VL61, VL62 ... VL65 in Rückwandmoduln enthalten sein, während die Anschlußleitungen an die optischen Sender und Empfänger sowie die zugehörigen Teile der Lichtwellenleiterkoppler in die Baugruppe integriert sind. Es ist aber auch möglich, daß die Teilnehmer aus einer einzigen Einheit bestehen, in die sämtliche Lichtwellenleiter und Koppler integriert sind, so daß keine gesonderten Rückwandmoduln mehr erforderlich sind. Die Teilnehmer werden dann auf einen Rahmen geschraubt oder gesteckt.

Während bei den bisher beschriebenen Ausführungsbeispielen Lichtwellenleiter aus Glas oder Kunststoff verwendet sind, ist im Ausführungsbeispiel nach Figur 7 das Übertragungsmedium Luft. Jeder Teilnehmer T71 ... T76 enthält wieder zwei Paar Sende- und Empfangsdioden SD3, SD4 bzw. ED3, ED4. Diese sind asymmetrisch zur horizontalen Mittelebene der Teilnehmer angeordnet. Auf der anderen Seite der Mittelebene befindet sich ein Lichtschacht LS1. Werden demgemäß die Teilnehmer wechselweise um 180° verdreht aneinandergereiht, folgt im Übertragungsweg jeweils auf ein Paar Sende-/Empfangsdioden ein Lichtschacht, so daß, wie in den zuvor beschriebenen Ausführungsbeispielen, die jeweils übernächsten Teilnehmer über zwei optische Übertragungsstrecken miteinander verbunden sind. Am Ende der Teilnehmergruppe wird das Licht umgelenkt, im Ausführungsbeispiel nach Figur 7 mit zwei Prismen PR1, PR2. Statt dessen können auch wieder Lichtleiterbügel eingesetzt werden. Die optischen Übertragungsstrecken sind mit gestrichelt gezeichneten Pfeilen veranschaulicht. Es ergeben sich wieder zwei ringförmige Übertragungsleitungen, auf denen Daten in entgegengesetzter Richtung übertragen werden. In einer solchen Anordnung kann ein Teilnehmer entnommen werden, ohne daß die Übertragungsleitungen unterbrochen werden.

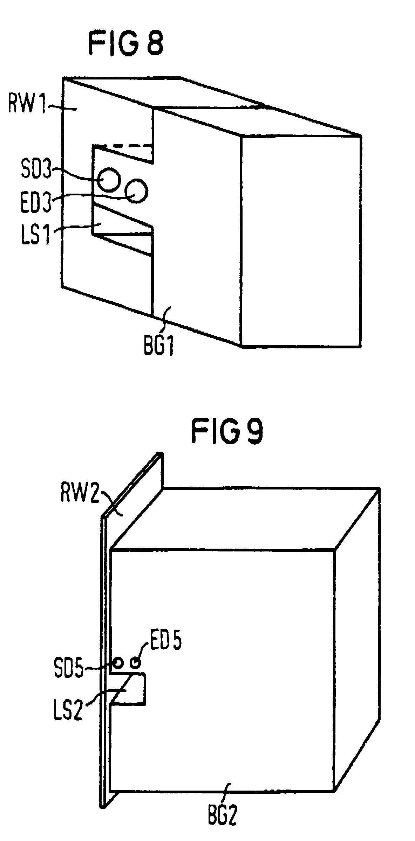

Figur 8 verdeutlicht den Aufbau der einzelnen Teilnehmer. Mit RW1 ist ein Rückwandmodul bezeichnet, der etwa U-förmig ausgebildet ist. In ihn greift ein Ansatz einer Baugruppe BG1 ein, an dessen einer Seite eine Sendediode SD3 und die eine Empfangsdiode ED3 angeordnet sind, deren Sende- bzw. Empfangsrichtung senkrecht zur Seitenfläche der Baugruppe ist. Auf der anderen Seitenfläche der Baugruppe ist das Diodenpaar SD4, ED4 angebracht, dessen Empfangsdiode ED4 koaxial zur Sendediode SD3 und dessen Sendediode SD4 koaxial zur Empfangsdiode ED3 angeordnet ist. Unterhalb des Ansatzes mit den Sende- und den Empfangsdioden bildet sich nach dem Einschieben der Baugruppe in dem Rückwandmodul RW1 der Lichtschacht LS1, durch den Licht zwischen den an die Baugruppe BG1 angrenzenden Baugruppen übertragen wird. Sitzt die Baugruppe am Ende einer Teilnehmergruppe, wird das Licht der Sendediode SD3 in den Lichtschacht LS1 umgelenkt bzw. das aus dem Lichtschacht LS1 austretende Licht wird auf die Empfangsdiode ED3 gelenkt. Dies kann, wie in der Anordnung nach Figur 7, mittels eines Prismas oder mittels Lichtwellenleiterbügel geschehen.

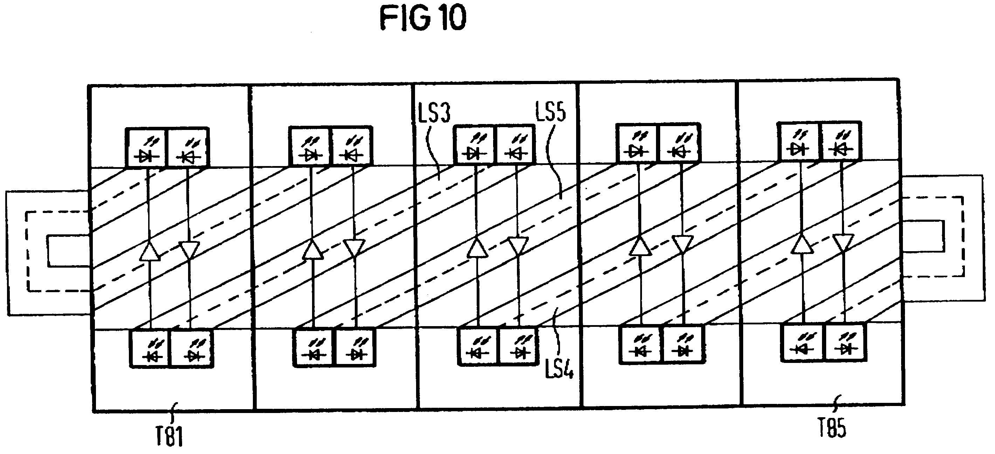

Eine andere Ausführungsform der Teilnehmer zeigt Figur 9. Hier besteht die Rückwand lediglich aus einem Blech RW2 mit Halterungen zur Aufnahme einer Baugruppe BG2. Diese weist an der Rückseite einen Schlitz auf, der als Lichtschacht LS2 dient. Je nach Einbaulage befindet sich über oder unter dem Schlitz ein Paar Sende- und Empfangsdioden SD5, ED5.

Die Teilnehmer nach den Figuren 8 und 9 brauchen auch nicht, wie in Figur 7 dargestellt, wechselweise um 180° gedreht, sondern sie können auch in einheitlicher Ausrichtung nebeneinander angeordnet sein. Es liegen dann jeweils die Sendedioden des einen Teilnehmers unmittelbar neben den Empfangsdioden der benachbarten Teilnehmer. Bei einer solchen Anordnung muß allerdings für eine Verbindung zwischen den an den Enden liegenden Teilnehmern gesorgt werden.

Figur 10 zeigt eine Anordnung, in der die Teilnehmer, wie in der Anordnung nach Figur 6, in gleicher Ausrichtung nebeneinander angeordnet sind, ohne daß eine Rückleitung erforderlich ist. Im Gegensatz zur Anordnung nach Figur 6 bestehen die Übertragungsstrecken zwischen den Teilnehmern nicht aus Lichtwellenleitern, sondern aus Lichtschächten. Jeder Teilnehmer weist drei Lichtschächte LS3, LS4, LS5 auf, die, entsprechend den Teilnehmern nach den Figuren 8 und 9, sowohl von der Rückwand als auch von den Baugruppen selbst gebildet sein können. Die Lichtschächte verlaufen schräg zur Ausrichtung der Teilnehmerreihe. Ein langer Lichtschacht LS5 ist Teil der Übertragungsstrecke zwischen den jeweils zwei benachbarten Teilnehmern, ein kurzer Lichtschacht LS3 dient zum Anschluß an den langen Lichtschacht des jeweils auf der einen Seite benachbarten Teilnehmers, der andere kurze Lichtschacht zum Anschluß an den langen Lichtschacht des auf der anderen Seite benachbarten Teilnehmers. Die Lichtschächte benachbarter Teilnehmer schließen so aneinander an, daß sie einen geradlinigen Lichtschacht zwischen je zwei übernächsten Teilnehmern bilden. Die Sende- und Empfangsdioden sind entsprechend der Richtung der Lichtschächte ausgerichtet. An den Enden der Teilnehmerreihe sind wieder Mittel, z. B. Prismen oder Lichtwellenleiterbügel, zum Rückführen des austretenden Lichtes angebracht.

Das neue Übertragungssystem kann so aufgebaut werden, daß sich in der Rückwand nur der passive Teil des Übertragungssystems befindet; die aktiven Bauelemente sind in der Baugruppe enthalten. Das System kann modular aufgebaut werden; denn auch der in der Rückwand enthaltene Teil der Übertragungsleitungen kann um je eine Baugruppenbreite erweitert werden. Sind, wie es in den Ausführungsbeispielen der Fall ist, zwei Ringleitungen mit entgegengesetzter Übertragungsrichtung vorhanden, kann ein Teilnehmer ausfallen, ohne daß das Übertragungssystem blockiert wird. Während des Betriebes können Teilnehmer hinzugesteckt oder gezogen werden, ohne daß eine Rückwirkung auf andere Teilnehmer erfolgt. Dies kann auch in explosionsgefährdeter Umgebung geschehen, da Probleme, wie Spannungsspitzen, Stromeinbrüche auf Datenleitungen, Ein- und Abschaltvorgänge der Laststromversorgung, Fremdstörfelder und sonstige EMV-Effekte, wegfallen. Die Rückwand ist unempfindlich gegen Spritzwasser, wird ein geeigneter Werkstoff gewählt, auch gegen aggressive Umgebung. Die Baugruppen lassen sich hermetisch abschließen und sind dennoch einfach an die Rückwand anzukoppeln.

Das erfindungsgemäße Übertragungssystem ist nahezu beliebig erweiterbar, da die übertragenen Signale in den einzelnen Teilnehmern aufbereitet und regeneriert werden. Es können weitere ringförmige Übertragungsleitungen gebildet werden, so daß mehrere Baugruppen ausfallen können, ohne daß das Gesamtsystem blockiert wird. Auch ist eine Bestückung mit redundanten Teilnehmern möglich. Ferner können die Daten teilweise oder vollständig parallel übertragen werden, wenn man mehrere Übertragungskanäle in den Rückwandmoduln vorsieht oder Multiplextechniken anwendet, wie sie zur Nachrichtenübertragung mit Lichtwellenleitern bekannt sind. Wie schon erwähnt, können die optoelektronischen Bauelemente (Transceiver) in die Rückwandmoduln integriert sein und die Baugruppen über elektrische Kontakte mit den Rückwandmoduln verbunden sein.

Die Baugruppen werden selbstverständlich über gesonderte Leitungen mit Energie versorgt, beispielsweise über Frontstecker.

## Patentansprüche

1. Optisches Datenübertragungssystem mit mehreren, in eine ringförmige optische Datenübertragungsleitung geschalteten, optische Sender (SD1, SD2) und Empfänger (ED1, ED2) aufweisenden Teilnehmern (T31, ..., T35) die derart in Reihe angeordnet sind, daß die innerhalb der Reihe liegenden Teilnehmer über optische Übertragungsstrecken mit den jeweils übernächsten Teilnehmern verbunden sind und die an den Enden der Reihe liegenden Teilnehmer auch mit dem jeweils benachbarten Teilnehmer über eine optische Übertragungsstrecke verbunden sind, **dadurch gekennzeichnet,** daß die Teilnehmer (T31, ..., T35) in einem Baugruppenträger in gleichen Abständen nebeneinander angeordnete Baugruppen (BG1,BG2) sind und daß die Datenübertragungsstrecken aus Moduln gebildet sind, die je einem Teilnehmer zugeordnet sind.

2. Datenübertragungssystem nach Anspruch 1, **dadurch gekennzeichnet,** daß die Moduln Lichtleiterbügel (BGL1, BGL2 ... BGL5) sind.

3. Datenübertragungssystem nach Anspruch 1 oder 2, **dadurch gekennzeichnet,** daß jeder Modul ein Zwischenstück der die benachbarten Moduln verbindenden Übertragungsstrecke sowie die Anfangs- und Endstücke der Übertragungsstrecken enthält, an die der zugehörige Teilnehmer angeschlossen ist.

4. Datenübertragungssystem nach Anspruch 3, **dadurch gekennzeichnet,** daß die Zwischenstücke und die Anfangs- und Endstücke in den Moduln senkrecht zu deren Seitenrändern verlaufen und daß die Moduln in der Reihe abwechselnd um 180° gedreht angeordnet sind.

5. Datenübertragungssystem nach Anspruch 3, **dadurch gekennzeichnet,** daß die Zwischenstücke und die Anfangs- und die Endstücke derart in den Moduln verlaufen, daß die Moduln in einheitlicher Lage angeordnet sind.

6. Datenübertragungssystem nach einem der Ansprüche 1 bis 5, **dadurch gekennzeichnet,** daß die optischen Übertragungsstrecken Lichtwellenleiter aus Glas oder Kunststoff sind.

7. Datenübertragungssystem nach einem der Ansprüche 1 bis 5, **dadurch gekennzeichnet,** daß die Übertragungsstrecken Hohlräume sind.

## Claims

1. Optical data transmission system having several stations (T31, ..., T35) which have optical transmitters (SD1, SD2) and receivers (ED1, ED2) and which are connected into a ring-form optical data transmission line and which are arranged in a row in such a way that the stations located within the row are connected to the respective next stations but one by way of optical transmission links and the stations located at the ends of the row are also connected to the respective adjacent station by way of an optical transmission link, **characterised in that** the stations (T31, ... , T35) are subassemblies (BG1, BG2) arranged at equal intervals side by side in a mounting rack and the data transmission links are formed by modules assigned to a respective station.

2. Data transmission system according to claim 1, **characterised in that** the modules are optical waveguide bows (BGL1, BGL2 ... BGL5).

3. Data transmission system according to claim 1 or 2, **characterised in that** each module comprises an intermediate part of the transmission link connecting the adjacent modules, and comprises the starting and ending parts of the transmission links to which the associated station is connected.

4. Data transmission system according to claim 3, **characterised in that**, in the modules, the intermediate parts and the starting and ending parts run perpendicularly in relation to the side edges of the modules and the modules are arranged in the row so that they are alternately rotated by 180°.

5. Data transmission system according to claim 3, **characterised in that**, in the modules, the intermediate parts and the starting and ending parts run in such a way that the modules are arranged in a uniform position.

6. Data transmission system according to one of claims 1 to 5, **characterised in that** the optical transmission links are optical waveguides made of glass or plastics.

7. Data transmission system according to one of claims 1 to 5, **characterised in that** the transmission links are hollow spaces.

## Revendications

1. Système optique de transmission de données comprenant plusieurs abonnés (T31,...,T35) comportant des émetteurs (SD1, SD2) et des récepteurs (ED1, ED2) optiques montés dans un conducteur optique en anneau de transmission de données et disposés en rangées de façon que les abonnés se trouvant dans une rangée soient reliés par des lignes de transmission optique respectivement aux abonnés venant immédiatement après ceux qui sont les plus proches, et les abonnés se trouvant aux extrémités de la rangée sont reliés également par des lignes de transmission optique respectivement aux abonnés les plus proches, caractérisé en ce que les abonnés (T31,...,T35) sont des blocs (BG1, BG2) disposés côte à côte en étant équidistants dans un support de bloc, et en ce que les lignes de transmission de données sont formées de modules associés chacun respectivement à un abonné.

2. Système de transmission de données suivant la revendication 1, caractérisé en ce que les modules sont des étriers (BGL1, BGL2...BGL5) de fibres optiques.

3. Système de transmission de données suivant la revendication 1 ou 2, caractérisé en ce que chaque module comporte une pièce intermédiaire de la ligne de transmission reliant les modules voisins, ainsi que les pièces de début et d'extrémité des lignes de transmission, auxquelles est raccordé l'abonné correspondant.

4. Système de transmission de données suivant la revendication 3, caractérisé en ce que les pièces intermédiaires et les pièces de début et d'extrémité s'étendent dans les modules perpendiculairement à leurs bords latéraux, et en ce que les modules sont disposés alternativement dans la rangée à 180°.

5. Système de transmission de données suivant la revendication 3, caractérisé en ce que les pièces intermédiaires et les pièces de début et d'extrémité s'étendent dans les modules de manière que les modules soient disposés en une couche unitaire.

6. Système de transmission de données suivant l'une des revendications 1 à 5, caractérisé en ce que les lignes de transmission optique sont des fibres optiques en verre ou en matière plastique.

7. Système de transmission suivant l'une des revendications 1 à 5, caractérisé en ce que les lignes de transmission sont des cavités.
